# EUROPEAN PATENT APPLICATION

(11) **EP 2 637 277 A1**
(43) Date of publication of application: **11.09.2013**
(21) Application number: 11837971.8
(22) Date of filing: 31.10.2011
(51) Int. Cl.: H02J 3/32

(54) **CONTROL APPARATUS**

(30) Priority: 02.11.2010 JP 2010246734
(71) Applicant: Sanyo Electric Co., Ltd., Osaka 570-8677 (JP)
(72) Inventor: TAIMA, Kenji, Moriguchi-shi Osaka 570-8677 (JP)
(74) Representative: Metzler, Volker
(86) International application number: PCT/JP2011/075060
(87) International publication number: WO 2012/060321

(57) **Abstract**

Provided is a control apparatus for an ancillary service that utilizes storage batteries. The control apparatus (10), which is for controlling charging/discharging between a power storage unit (20) and a power grid (5), and of discharging from the power storage unit (20) to a load (6), allots the rechargeable batteries (21, 22, 23) to a power-grid power-storage section that is for controlling discharging to the power grid (5) on the basis of the amount of economical profit to be raised by this control and/or the state of rechargeable batteries (21, 22, 23) contained in the power storage unit (20), and to a load power-storage section that is for controlling discharging to the load (6), to control discharging from the power-grid power-storage section to the power grid (5), and discharging from the load power-storage section to the load (6).

## Description

### CROSS-REFERENCE TO RELATED APPLICATION

The present application is a continuation application of International Application No. PCT/JP2011/075060, filed October 31, 2011, the entire contents of which are incorporated herein by reference and priority to which is hereby claimed. The PCT/JP2011/075060 application claimed the benefit of the date of the earlier filed Japanese Patent Application No. 2010-246734 filed November 2, 2010, the entire content of which is incorporated herein by reference, and priority to which is hereby claimed.

### TECHNICAL FIELD

The present invention relates to a control apparatus, and more particularly to a control apparatus which performs control for charging and discharging with respect to a power storage unit.

### BACKGROUND ART

In order to supply electric power to each customer in a stable manner by using a power grid connected to a power generation company and the like, it is necessary to keep supply and demand in balance when operating the power grid. In Europe and the United State and the like, for example, power operation companies exist that have been established for the purpose of achieving stable operations of the power grid. In Europe and the United States, the so-called ancillary service is being carried out. In this ancillary service, an owner of a power storage device makes an agreement with the power operation company and performs charging and discharging in accordance with power charging and discharging instructions issued from the power operation company, so that the power operation cooperation money is paid to the owner of the power storage device.

Patent Literature 1 describes a method for providing an ancillary service in which secondary batteries are provided and the amount of the ancillary service to be provided by the secondary batteries and the ability of the secondary batteries to provide the ancillary service during a predetermined time period are integrated and recorded for customers who allow sharing of the ancillary service.

### PRIOR ART DOCUMENT

### PATENT LITERATURE

Patent Literature 1: JP 2003-284244 A

### DISCLOSURE OF THE INVENTION

### TECHNICAL PROBLEMS

Here, a contractor who has concluded the agreement of an ancillary service with the power operation company is required to respond to the power charging and discharging instructions issued from the power operation company. In order to respond to the power charging and discharging instructions, the contractor previously has a power storage device with a sufficient capacity. However, as there are cases in which the power storage device may have a capacity which has not been used at all depending on the situation of the power charging and discharging instructions issued from the power operation company, it is desired that the power storage device should be utilized more effectively.

It is therefore an object of the present invention to provide a control apparatus which enables effective use of a power storage device when power charging and discharging is performed between a power grid and a load, and the power storage device.

### SOLUTION TO PROBLEMS

In accordance with an aspect of the present invention, there is provided a control apparatus which performs control for charging or discharging between a power storage device and a power grid and discharging from the power storage device to a load, wherein the control apparatus, on the basis of at least one of an amount of economical profit to be obtained by the control and a state of storage batteries included in the power storage device, allocates the storage batteries to a power-grid power-storage section for controlling discharging to the power grid and a load power-storage section for controlling discharging to the load, to control discharging from the power-grid power-storage section to the power grid and discharging from the load power-storage section to the load.

### ADVANTAGEOUS EFFECTS OF INVENTION

According to the control apparatus having the structure described above, the storage batteries included in the power storage device are allocated to a power-grid power-storage section for controlling discharging to the power grid and to a load power-storage section for controlling discharging to the load, on the basis of predetermined parameters, for supplying power to the power grid and the load. With this structure, as it is possible to allocate the storage batteries to the power-grid power-storage section and to the load power-storage section on the basis of various parameters, it is possible to utilize the power storage device more effectively.

### BRIEF DESCRIPTION OF THE DRAWINGS

[FIG. 1] View illustrating a power management system in an embodiment according to the present invention.
[FIG. 2] Flow chart illustrating the procedure for performing an ancillary service by the power management system in the embodiment according to the present invention.

### BEST MODE FOR CARRYING OUT THE INVENTION

A preferred embodiment of the present invention will be described in detail below with reference to the drawings. Ancillary services often refer to various services provided for stable power supply to each customer by using a power grid. In the following description, an ancillary service refers to a service for controlling charging and discharging of a power storage device with respect to a power grid in response to a request from a power operation company.

Further, while in the following description a lithium ion battery is described as a storage battery, other secondary batteries, such as a nickel-metal hydride battery and a nickel-cadmium battery, for example, may also be adopted.

Also, in the following, similar components are denoted by similar reference numerals in all the drawings and will not be described repeatedly. Further, in the following description, reference numerals which have been described before may be used, as necessary.

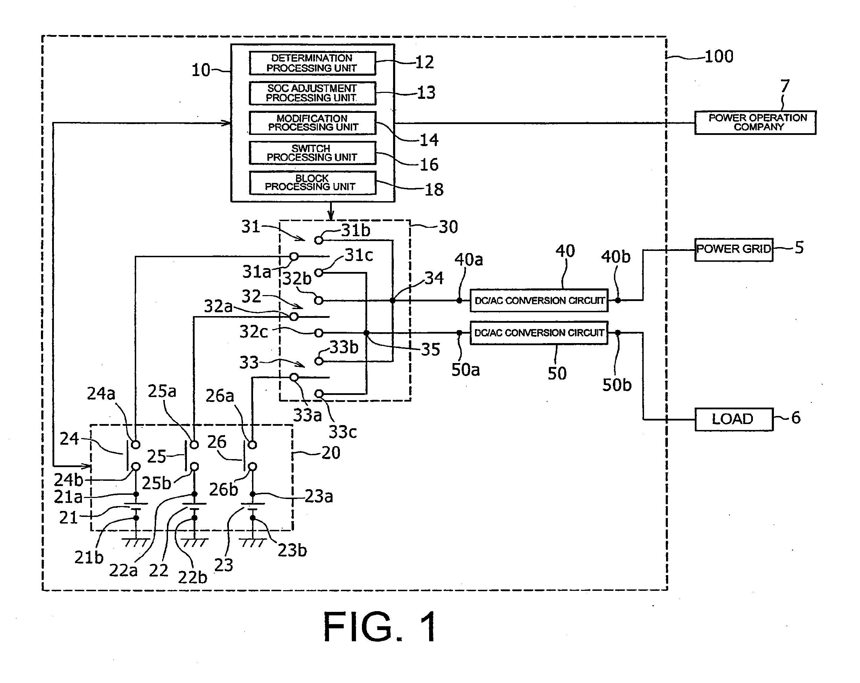

FIG. 1 is a view illustrating a power management system 100. The power management system 100 includes a control apparatus 10, a power storage unit 20, a switch circuit unit 30, a DC/AC conversion circuit 40, and a DC/AC conversion circuit 50. The power management system 100 is connected to a power grid 5, a load 6, and a power operation company 7.

The power management system 100 is often installed in a relatively large-scale facility such as a plant facility, a large hospital, and so on, for example. The power management system 100 receives power operation cooperation money from the power operation company 7 due to an ancillary service in accordance with a power charging and discharging instruction from the power operation company 7. In other words, the power management system 100 contributes to gaining of economical profit. Further, by performing discharging from the power storage unit 20 to the load 6, it is possible to use the power storage unit 20 as a power supply source with respect to the load 6. As such, the power management system 100 can save costs for electricity. In other words, the power management system 100 contributes to gaining of economical profit.

The power grid 5 is a grid system for supplying power supplied from the power generation company or the like to each customer in accordance with a change of the demand-supply of the power. The power supplied from the power generation company or the like includes power generated by various power generation systems, such as hydroelectric power generation, nuclear electric power generation, solar photovoltaic power generation, and so on. The power grid 5 is connected to a second terminal 40b of the DC/AC conversion circuit 40.

The load 6 is an illumination apparatus, an electric device, and so on, used within a facility in which the power management system 100 is installed. The load 6 is connected to a second terminal 50b of the DC/AC conversion circuit 50.

The power operation company 7 is a company which performs an operation such that supply and demand of the power is balanced, so as to make power supply from the power grid 5 to each customer stable. The power operation company 7 provides, to the power storage unit 20 of a plurality of contractors who have concluded an ancillary service contract with the power operation company 7, an instruction to charge or discharge with respect to the power grid 5. For example, when the power grid 5 is short of power, the power operation company 7 provides an instruction to discharge power from the power storage unit 20 to the power grid 5. Further, when the power grid 5 has an excess of power, the power operation company 7 provides an instruction to charge the power storage unit 20 with the excessive power from the power grid 5.

Here, the power operation cooperation money paid by the power operation company 7 varies depending on the time zone of the charging and discharging instruction provided to the power management system 100. Further, the power operation cooperation money varies depending on the electricity transaction market, including various situations such as the number of contractors of an ancillary service, and so on.

In many cases, the ancillary service contracts with the power operation company 7 are advertized on a regular basis. For example, on the previous day to the day an ancillary service is carried out, information concerning the scheduled charging and discharging necessary on that ancillary service day is sent to each cooperator including the power management system 100. Each cooperator, when deciding that cooperation on the basis of an ancillary service is possible on that service day, makes an ancillary service contract with the power operation company 7.

The power storage unit 20 includes secondary batteries 21, 22, and 23 and breakers 24, 25, and 26. The secondary batteries 21, 22, and 23 are storage batteries used for charging and discharging with respect to the power grid 5 and the load 6. The secondary batteries 21, 22, and 23 are configured by including a negative electrode formed of a carbon material, an electrolyte for transferring lithium ions, and a positive active material with respect to which lithium ions can be reversibly inserted and extracted.

The secondary battery 21 includes a positive electrode side terminal 21a and a negative electrode side terminal 21b. The positive electrode side terminal 21a of the secondary battery 21 is connected to a second terminal 24b of the breaker 24, and the negative electrode side terminal 21b is grounded. Further, charging and discharging of the secondary battery 21 is controlled by the control apparatus 10 such that the SOC (State of Charge) indicating the power storage state corresponding to the amount of storage power falls within a predetermined range (20% to 80%, for example). The detailed description of the secondary batteries 22 and 23, which have similar structures to the secondary battery 21, will be omitted.

The breaker 24 is a device which blocks connection between the secondary battery 21, and the power grid 5 and the load 6, under control of the control apparatus 10, when protection of the secondary battery 21 is necessary. The breaker 24 includes a first terminal 24a and a second terminal 24b, and the first terminal 24a is connected to a first terminal 31a of a switch circuit 31, and the second terminal 24b is connected to the positive electrode side terminal 21a of the secondary battery 21. The detailed description of the breakers 25 and 26, which have similar structures to the breaker 24, will be omitted.

The switch circuit unit 30 includes a switch circuit 31, a switch circuit 32, and a switch circuit 33. The switch circuit 31 is a changeover circuit that switches the subject for which charging and discharging to and from the secondary battery 21 is performed between the power grid 5 and the load 6, under control of the control apparatus 10. The switch circuit 31 includes a first terminal 31a, a second terminal 31b, and a third terminal 31c. The first terminal 31a is connected to the first terminal 24a of the breaker 24. The second terminal 31b is connected to a first terminal 40a of the DC/AC conversion circuit 40. The third terminal 31c is connected to a first terminal 50a of the DC/AC conversion circuit 50.

Here, when the first terminal 31a of the switch circuit 31 is connected to the second terminal 31b, control for charging and discharging is performed between the secondary battery 21 and the power grid 5. On the other hand, when the first terminal 31a of the switch circuit 31 is connected to the third terminal 31c, control for charging and discharging is performed between the secondary battery 21 and the load 6. The detailed description of the switch circuits 32 and 33, which have similar structures to the switch circuit 31, will be omitted.

The second terminals 31b, 32b, and 33b of the switch circuits 31, 32, and 33, respectively, are made a common terminal at a connection point 34, which is then connected to a first terminal 40a of the DC/AC conversion circuit 40. Further, the third terminals 31c, 32c, and 33c of the switch circuits 31, 32, and 33, respectively, are made a common terminal at a connection point 35, which is then connected to a first terminal 50a of the DC/AC conversion circuit 50.

The DC/AC conversion circuit 40 is a power conversion circuit which performs power conversion between direct-current power and alternating-current power. The DC/AC conversion circuit 40 includes a first terminal 40a and a second terminal 40b. The first terminal 40a of the DC/AC conversion circuit 40 is connected to the connection point 34 and the second terminal 40b of the DC/AC conversion circuit 40 is connected to the power grid 5.

The DC/AC conversion circuit 50 is a power conversion circuit which performs power conversion between direct-current power and alternating-current power. The DC/AC conversion circuit 50 includes a first terminal 50a and a second terminal 50b. The first terminal 50a of the DC/AC conversion circuit 50 is connected to the connection point 35 and the second terminal 50b of the DC/AC conversion circuit 50 is connected to the power grid 5. When the load 6 is driven with direct current, a DC/DC conversion circuit is used in place of the DC/AC conversion circuit 50.

On the basis of the charging and discharging instructions from the power operation company 7 and the power required from the load 6, the control apparatus 10 controls charging and dischargingbetween the power storage unit 20, and the power grid 5 and the load 6. The control apparatus 10 includes a determination processing unit 12, an SOC adjustment processing unit 13, a modification processing unit 14, a switching processing unit 16, and a block processing unit 18. Each function of the control apparatus 10 may be implemented either by hardware or software.

The determination processing unit 12, on the basis of a predetermined parameter, such as an amount of economical profit which can be expected to be obtained by charging and discharging, for example, groups the secondary batteries 21, 22, and 23 of the power storage unit 20 into two groups, which are a power-grid power-storage section for the power grid 5 and a load power-storage section for the load 6, for allocation.
For this purpose, the determination processing unit 12 obtains charging and discharging schedule information transmitted from the power operation company 7 on the previous day to the day on which an ancillary service is carried out. On the basis of the charging and discharging schedule information, the determination processing unit 12 receives power operation cooperation money information which can be obtained if the contractor cooperates with the ancillary service on that service day, from a database that stores past power-grid side profit information in which each time zone on the day of an ancillary service in the past corresponding to that service day and the power operation cooperation money in that time zone are correlated to each other. The determination processing unit 12, on the basis of the power operation cooperation money information, calculates a power-grid side estimated profit which is an estimated value of the economical profit which can be obtained when cooperation with the charging and discharging control is made with respect to the power grid 5.

Further, the determination processing unit 12 calculates a load side estimated profit which is an estimated value of the economical profit which can be obtained when charging and discharging is performed between the power storage unit 20 and the load 6. Information which should be considered as the load side estimated profit includes a profit which can be obtained by using, as a power supply source to the load 6, the power storage unit 20 in place of a commercial power source connected to the power grid 5. Other information which should be considered as the load side profit is a profit which can be obtained by peak-cut processing in which, as a power supply source to the load 6, the power storage unit 20 is used in place of a commercial power source connected to the power grid 5, at the peak time of the power required by the load 6 which changes momentarily. The information which should be considered as the load side estimated profit is stored in the database described above as past load side profit information.

The determination processing unit 12, comparing the power-grid side estimated profit and the load side estimated profit, determines a ratio for performing charging and discharging between the power storage unit 20, and the power grid 5 and the load 6. More specifically, the determination processing unit 12 groups the secondary batteries 21, 22, and 23 of the power storage unit 20 into two groups and allocates the two groups to a power-grid power-storage section for the power grid 5 and a load power-storage section for the load 6, respectively. For example, the determination processing unit 12 allocates the secondary batteries 21 and 22 to the power-grid power storage section for the power grid 5, and allocates the secondary battery 23 to the load power-storage section for the load 6. The determination processing unit 12 then transmits, to the power operation company 7, a reply that a contract of an ancillary service is to be made. Here, while the power-grid side estimated profit and the load side estimated profit will be described as the parameters for the allocation between the power-grid power-storage section and the load power-storage section, other factors can also be considered.

The SOC adjustment processing unit 13, in accordance with the allocation between the power-grid power-storage section and the load power-storage section which is determined by the determination processing unit 12, controls the SOC of the secondary batteries 21, 22, and 23, such that appropriate charging and discharging control can be started. More specifically, the SOC adjustment processing unit 13 adjusts the charging and discharging control with respect to each of the secondary batteries 21, 22, and 23 from the time when the allocation is determined by the determination processing unit 12 to the starting time of the ancillary service, such that each of the secondary batteries 21, 22, and 23 is in an appropriate SOC at the time of starting the ancillary service.

On the day an ancillary service is carried out, the modification processing unit 14 performs control for charging and discharging between the power storage unit 20 and the power grid 5 in accordance with the charging and discharging instructions supplied from the power operation company 7, and also performs control for discharging from the power storage unit 20 to the load 6 in accordance with the power required by the load 6. For example, it is assumed that the secondary batteries 21 and 22 are allocated to the power-grid power-storage section for the power grid 5 and the secondary battery 23 is allocated to the load power-storage section for the load 6. In this case, the modification processing unit 14 performs control for charging and discharging between the secondary batteries 21 and 22 and the power grid 5 in accordance with the charging and discharging instructions supplied from the power operation company 7, and also performs control for discharging from the secondary battery 23 to the load 6 in accordance with the power required by the load 6. The modification processing unit 14 also determines whether or not the ancillary service for that day is completed.

During the ancillary service being performed after the allocation between the power-grid power-storage section and the load power-storage section is determined by the determination processing unit 12, the modification processing unit 14 modifies the allocation between the power-grid power-storage section and the load power-storage section, on the basis of the parameter information. For example, the modification processing unit 14 can modify the allocation between the power-grid power-storage section and the load power-storage section in consideration of the charging and discharging instructions from the power operation company 7, the SOC of the secondary batteries 21, 22, and 23, and the cost for electricity required when using a commercial power source connected to the power grid 5 as a power supply source to the load 6, i.e. the economical loss. While in the above example, the secondary batteries 21 and 22 are allocated to the power-grid power-storage section for the power grid 5 and the secondary battery 23 is allocated to the load power-storage section for the load 6, on the actual ancillary service day, it is possible to modify the allocation of the secondary battery 22 and allocate the secondary battery 22 to the load power-storage section for the load 6, because the amount of power instructed by the charging and discharging instructions from the power operation company 7 is small.

The switching processing unit 16 has a function of controlling switching of the switch circuit unit 30 on the basis of the power-grid power storage section and the load power-storage section allocated by the determination processing unit 12 and the modification processing unit 14. As described in the above example, a case in which the secondary batteries 21 and 22 are allocated to the power-grid power-storage section for the power grid 5 and the secondary battery 23 is allocated to the load power-storage section for the load 6 will be described. The switch processing unit 16 switches the switch circuit 31 such that the first terminal 31a of the switch circuit 31 is connected to the second terminal 31b, switches the switch circuit 32 such that the first terminal 32a is connected to the second terminal 32b, and switches the switch circuit 33 such that the first terminal 33a is connected to the third terminal 33c.

The block processing unit 18 has a function of controlling blocking of the connection between the secondary batteries 21, 22, and 23, and the power grid 5 and the load 6. For example, when the SOC of the secondary battery 22 indicating the power storage state thereof is out of the predetermined range (e.g. 20% to 80%), the block processing unit 18 controls blocking of the breaker 25 so as to protect the secondary battery 22.

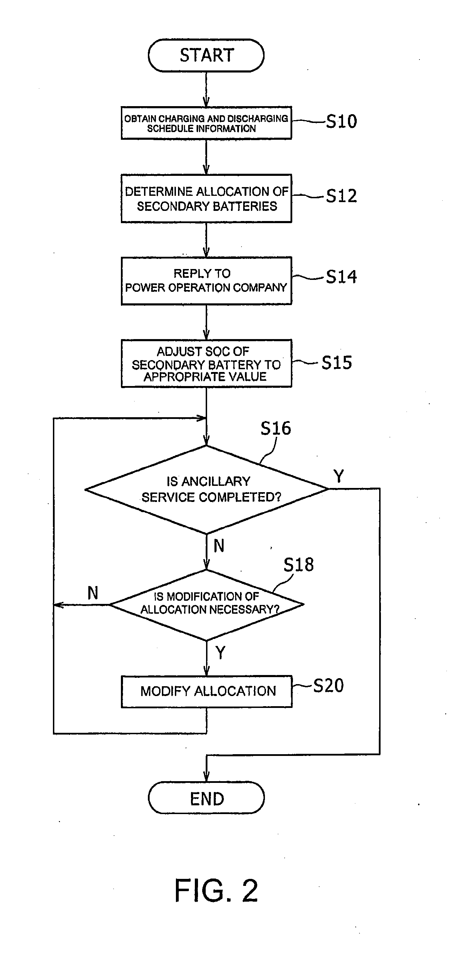

The operation of the power management system 100 having the above-described structure will be described in detail with reference to FIGs. 1 and 2. FIG. 2 is a flowchart illustrating a procedure in performing an ancillary service by the power management system 100. The control apparatus 10 of the power management system 100 obtains information which is necessary for performing an ancillary service to be carried out on the following day, i.e. charging and discharging schedule information transmitted from the power operation company 7 (S10). This step is implemented by the function of the determination processing unit 12 of the control apparatus 10.

Next, the control apparatus 10 determines a ratio of charging and discharging between the power storage unit 20, and the power grid 5 and the load 6. More specifically, the control apparatus 10 compares the power-grid side estimated profit with the load side estimated profit, and allocates, from a view point of the economical profit, the secondary batteries 21, 22, and 23 to the power-grid power-storage section for the power grid 5 and to the load power-storage section for the load 6 (S12). This process is implemented by the function of the determination processing unit 12 of the control apparatus 10. As the point of view of the economical profit, the allocation between the power-grid power-storage section and the load power-storage section is performed such that the sum of the power-grid-side estimated profit and the load-side estimated profit is maximized.

The control apparatus 10 then sends a reply that an ancillary service contract is to be made to the power operation company 7 (S14). This step is implemented by the function of the determination processing unit 12 of the control apparatus 10.

Thereafter, in accordance with the allocation determined by the determination processing unit 12, charging and discharging is controlled such that the SOC of each of the secondary batteries 21, 22, and 23 is an appropriate SOC, during the period from the time when the allocation is determined to the starting time of the ancillary service (S15). This step is implemented by the function of the adjustment processing unit 13 of the control apparatus 10.

Further, on the day the ancillary service is carried out, the control apparatus 10 performs control for charging and discharging between the power storage unit 20 and the power grid 5 in accordance with the charging and discharging instructions from the power operation company 7, and also performs control for discharging from the power storage unit 20 to the load 6 in accordance with the power required by the load 6. The control apparatus 10 also determines whether or not the ancillary service for that day is completed (S16). This step is implemented by the function of the modification processing unit 14 of the control apparatus 10. When it is determined that the ancillary service is completed in the step S16, the processing proceeds to END processing.

When it is determined that ancillary service is not completed at step S16, whether or not it is necessary to modify the allocation, i.e. grouping, of the secondary batteries 21, 22, and 23, is determined in the step S12 (S18). This step is implemented by the function of the modification processing unit 14 of the control apparatus 10. Here, as a criterion for determining whether or not it is necessary to modify the allocation, it is determined that modification is necessary when the total estimated profit, which is a sum of the power-grid side estimated profit and the load-side estimated profit, differs significantly from the total profit which can be actually obtained during the ancillary service, because the actual amount of power instructed by the charging and discharging instructions from the power operation company 7 is small, e.g. when the total estimated profit differs from the actual total profit by 5%. Also, when the SOC of one of the secondary batteries 21, 22, and 23 falls out of the predetermined range, it is necessary to remove that secondary battery from the allocation, and it is therefore determined that modification of the allocation is necessary. When it is determined that it is not necessary to modify the allocation of the secondary batteries 21, 22, and 23 at step S18, the processing returns to step S16.

When it is determined, at step S18, that it is necessary to modify the allocation of the secondary batteries 21, 22, and 23, the control apparatus 10 modifies the allocation of the secondary batteries 21, 22, and 23, in consideration of the charging and discharging instructions from the power operation company 7, the SOC of the secondary batteries 21, 22, and 23, and the cost of electricity (the economical loss) required when a commercial power source connected to the power grid 5 is used as the power supply source to the load 6. This step is implemented by the function of the modification processing unit 14 of the control apparatus 10. For example, in consideration of the above factors, when the amount of power instructed by the charging and discharging instructions from the power operation company 7 is small, modification of the allocation is performed so as to improve the total economical profit. Further, when the SOC of one of the secondary batteries 21, 22, and 23 is out of the predetermined range and it is necessary to protect that secondary battery, modification of the allocation is performed such that a reduction in the total economical profit can be minimized. After the step S20, the processing returns to step S16.

As described above, according to the power management system 100, it is possible to compare the power-grid side estimated profit with the load side estimated profit and allocate the secondary batteries 21, 22, and 23 of the power storage unit 20 to the power-grid power-storage section for the power grid 5 and the load power-storage section for the load 6, such that the sum of the power-grid-side estimated profit and the load-side estimated profit can be maximized. Consequently, it is possible to utilize the secondary batteries 21, 22, and 23 effectively by allocating each of the secondary batteries 21, 22, and 23 of the power storage unit 20 to perform charging and discharging between the power storage unit 20 and the power grid 5 and between the power storage unit 20 and the load 6. It is possible to acquire an economical profit by obtaining the power operation cooperation money paid from the power operation company 7 due to the ancillary service and to simultaneously acquire an economical profit by using the power storage unit 20 in place of the commercial power source connected to the power grid 5 as the power supply source to the load 6, to thereby save the cost for electricity.

Further, after the allocation of the secondary batteries 21, 22, and 23 is performed on the basis of the estimated profit, if the amount of power instructed by the charging and discharging instructions from the power operation company 7 is small on the actual ancillary service day, it is possible to modify the allocation so as to improve the total economical profit. It is also possible to modify the allocation such that a reduction in the total economical profit is minimized, when the SOC of one of the secondary batteries 21, 22, and 23 is out of the predetermined range and it is therefore necessary to protect the secondary battery. As such, because it is possible to reorganize the allocation between the power-grid power-storage section and the load power-storage section in accordance with the actual operation status, the secondary batteries 21, 22, and 23 of the power storage unit 20 can be utilized more effectively. For example, when the power-grid side estimated profit and the load side estimated profit differ from the actual costs, the allocation between the power-grid power-storage section and the load power-storage section may be modified as appropriate in accordance with the actual costs.

While in the above description an example case has been described in which an ancillary service contract is concluded after obtaining the charging and discharging schedule information transmitted from the power operation company 7 and comparing the power-grid side estimated profit and the load side estimated profit with each other, a case in which the ancillary service contract is not concluded may also apply. In other words, all of the secondary batteries 21, 22, and 23 of the power storage unit 20 may be allocated to the load power-storage section for the load 6. When an ancillary service contract is concluded, depending on the results of the above comparison, all of the secondary batteries 21, 22, and 23 of the power storage unit 20 may be allocated to the power-grid power-storage section for the power grid 5.

It has been described that, according to the power management system 100, the determination of allocation between the power-grid power-storage section and the load power-storage section is performed in units of secondary battery, by grouping the secondary batteries 21, 22, and 23 into two groups for allocation, such as by allocating the secondary batteries 21 and 22 to the power-grid power-storage section for the power grid 5 and allocating the secondary battery 23 to the load power-storage section for the load 6, for example. However, the allocation is not limited to grouping in units of secondary battery, and may be performed by allocating each of the secondary batteries 21, 22, and 23 to the load power-storage section for the load 6 when the SOC of the secondary battery is within the range of 20 to 40% and the range of 60 to 80%, and allocating each of the secondary batteries 21, 22, and 23 to the power-grid power-storage section for the power grid 5 when the SOC of the secondary battery is within the range of 40 to 60%, for example.

In the above description, the power management system 100 which determines allocation of the secondary batteries 21, 22, and 23 to the power-grid power-storage section and the load power-storage section in consideration of the power-grid side estimated profit and the load side estimated profit, or the like, on the basis of the charging and discharging schedule information transmitted from the power operation company 7 on the previous day of the ancillary service day has been described. However, the charging and discharging schedule information is not necessarily transmitted on the previous day to the ancillary service day, and it is naturally possible for the charging and discharging schedule information to be transmitted immediately before the service starting time, one hour before the service starting time, for example.

In the above description, the power management system 100 which determines allocation of the secondary batteries 21, 22, and 23 to the power-grid power-storage section and the load power-storage section in consideration of the power-grid side estimated profit and the load side estimated profit also modifies the allocation has been described. However, the allocation may be determined and modified in consideration of other information. For example, the state of variation of the power operation cooperation money in the electricity transaction market while the ancillary service is being carried out may be taken into consideration, and the costs for electricity that differ depending on the district or the time zone may also be taken into consideration. Further, the economical profit which can be obtained by selling electric power generated by the power storage section 20 will be taken into consideration.

The determination and modification of the allocation of the secondary batteries 21, 22, and 23 to the power-grid power-storage section and the load power-storage section may be performed in consideration of a viewpoint other than the economical profit, and the state of the secondary batteries 21, 22, and 23 of the power storage unit 20 may be taken into consideration. Here, in the case of an ancillary service, charging and discharging of power of a small capacity is performed between the power storage unit 20 and the power grid 5 over short periods (e.g. once in 2 or 4 seconds). On the other hand, when the power is supplied to the load 6, exchange of power of a larger capacity is performed between the power storage unit 20 and the load 6 over a longer period.
Accordingly, in the ancillary service, because the life of the battery deteriorates easily and also a small amount of storage power may be sufficient, as the secondary batteries 21, 22, and 23 which are allocated in this case, a secondary battery having a long life is preferable and a secondary battery having a storage power amount which is not so large (e.g. the SOC is 60%) may be sufficient.
When the power is supplied to the load 6, on the other hand, because the rate of deterioration of the battery life is slower than that in the ancillary service, and also because a battery having a larger storage power amount can supply power of a larger capacity, as the secondary batteries 21, 22, and 23 which are allocated in this case, a secondary battery having a storage power amount which is as large as possible is preferable, and a secondary battery having a short life may be sufficient.
Accordingly, the determination processing unit 12 may group the secondary batteries 21, 22, and 23 of the power storage unit 20 into two groups for allocation to the power-grid power-storage section for the power grid 5 and the load power-storage section for the load 6, on the basis of the state of the secondary batteries 21, 22, and 23. As the state of the secondary batteries 21, 22, and 23, the remaining battery level at the present time, a proper charging amount, an estimated remaining battery level, the number of times of charging and discharging on the basis of previous experience, the life of battery, the history of allocation to previous ancillary services, for example, may be considered.
The battery life may be estimated by the determination processing unit 12 from the proper charging amount and the number of times of charging and discharging on the basis of previous experience. Further, the determination processing unit 12 may also estimate the battery life by referring to a table or graph, stored within the determination processing unit 12, which specifies a corresponding relationship between the integration values of the charging and discharging capacity in the past and the internal resistance, and the battery life, which is previously obtained through measurements and simulation and the like.
The determination processing unit 12, on the basis of the remaining battery level at the present time and the estimated remaining battery level, may allocate, among the secondary batteries 21, 22, and 23 of the power storage unit 20, a secondary battery having a value of storage power amount which is greater than a predetermined threshold value, to the load power-storage section for the load 6, and allocate the remaining batteries to the power-grid power-storage section for the power grid 5. Further, the determination processing unit 12, on the basis of the battery life, may also allocate, among the secondary batteries 21, 22, and 23 of the power storage unit 20, a secondary battery having a life which is greater than a predetermined threshold value, to the power-grid power-storage section for the power grid 5 and allocate the remaining batteries to the load power-storage section for the load 6. Also, the determination processing unit 12, on the basis of the history of allocation to previous ancillary services, may also allocate, among the secondary batteries 21, 22, and 23 of the power storage section 20, a secondary battery which has been previously allocated to an ancillary service less often to the power-grid power-storage section for the power grid 5 first, and allocate the remaining batteries to the load power-storage section for the load 6, so that a specific battery is not allocated to the ancillary service in succession.
Further, factors other than the SOC of the secondary batteries 21, 22, and 23 may be considered. For example, the real-time demand forecast of the customers or the like connected to the power grid 5 can be taken into consideration.

### REFERENE SYMBOL LIST

5 power grid, 6 load, 7 power operation company, 10 control apparatus, 12 determination processing unit, 13 SOC adjustment processing unit, 14 modification processing unit, 16 switching processing unit, 18 block processing unit, 20 power storage unit, 21, 22, 23 secondary battery, 21a positive-electrode side terminal, 21b negative-electrode side terminal, 24, 25, 26 breaker, 24a first terminal, 24b second terminal, 30 switch circuit unit, 31, 32, 33 switch circuit, 31a, 32a, 33a first terminal, 31b, 32b, 33b second terminal, 31c, 32c, 33c third terminal, 34, 35 connection point, 40 DC/AC conversion circuit, 40a first terminal, 20b second terminal, 50 DC/AC conversion circuit, 50a first terminal, 50b second terminal, 100 power management system.

## Claims

1. A control apparatus which performs control for charging or discharging between a power storage device and a power grid and discharging from the power storage device to a load,
wherein the control apparatus, on the basis of at least one of an amount of economical profit to be obtained by the control and a state of storage batteries included in the power storage device, allocates the storage batteries to a power-grid power-storage section for controlling discharging to the power grid and a load power-storage section for controlling discharging to the load, to control discharging from the power-grid power-storage section to the power grid and discharging from the load power-storage section to the load.

2. The control apparatus according to Claim 1, wherein
the power storage device includes a plurality of storage batteries, and
the plurality of storage batteries are grouped into storage batteries allocated to the power-grid power-storage section and storage batteries allocated to the load power-storage section.

3. The control apparatus according to Claim 1, wherein
a first ratio of a storage power amount of the storage batteries is allocated to the power-grid power-storage section, and a second ratio of a storage power amount of the storage batteries is allocated to the load power-storage section.

4. The control apparatus according to any one of Claims 1 to 3, wherein
the control for charging and discharging between the power grid and the power storage device is performed on the basis of a charging and discharging instruction externally provided, and
the control for discharging from the power storage device to the load is performed on the basis of power required by the load.

5. The control apparatus according to Claim 4, wherein
when the control for charging and discharging is being performed on the basis of the charging and discharging instruction externally provided, and the power required by the load within a predetermined time period from a predetermined time after the allocation between the power-grid power-storage section and the load power-storage section is temporarily performed on the basis of the amount of economical profit to be obtained by the control, the allocation between the power-grid power-storage section and the load power-storage section is modified on the basis of the amount of storage power of the storage batteries and economical loss to be caused by supplying power to the load from a commercial power source.

6. The control apparatus according to any one of Claims 1 to 5, wherein
the amount of economical profit to be obtained by the control includes power-grid side estimated profit, which is an estimated value of an amount of profit to be obtained when charging and discharging is performed between the power grid and the power storage device, and load side estimated profit, which is an estimated value of an amount of profit to be obtained when discharging is performed from the power storage device to the load, and
the control apparatus performs allocation between the power-grid power-storage section and the load power-storage section on the basis of the power-grid side estimated profit and the load side estimated profit.

7. The control apparatus according to Claim 6, wherein
the power-grid side estimated profit is an estimated value of an amount of economical profit based on past profit information which was obtained when the control for charging and discharging was performed between the power grid and the power storage device in the past.

8. The control apparatus according to Claim 6 or 7, wherein
the load side estimated profit is an estimated value of an amount of economical profit based on past profit information which was obtained when the power storage device was used in place of a commercial power source as a power supply source to the load.

9. The control apparatus according to Claim 6 or 7, wherein
the load side estimated profit is an estimated value of an amount of economical profit based on past profit information which was obtained when peak-cut processing was performed in which the power storage device was used in place of a commercial power source as a power supply source to the load at the peak of the power required by the load.

10. The control apparatus according to any one of Claims 6 to 9, wherein
when the control for charging and discharging is performed on the basis of the charging and discharging instruction externally provided, and the power required by the load within a predetermined time period from a predetermined time after the allocation between the power-grid power-storage section and the load power-storage section is temporarily performed, the control for charging and discharging the storage batteries of the power storage device is performed such that the State of Charge (SOC) of the power storage device remains within an appropriate range at the predetermined time.

11. The control apparatus according to any one of Claims 6 to 10, wherein
when the control for charging and discharging is being performed on the basis of the charging and discharging instruction externally provided, and the power required by the load within a predetermined time period from a predetermined time after the allocation between the power-grid power-storage section and the load power-storage section is temporarily performed, the allocation between the power-grid power-storage section and the load power-storage section is modified, when the load side estimated profit and the power-grid side estimated profit differ from respective actual amounts of profit, in accordance with the actual amounts of profit.
